# EUROPÄISCHE PATENTSCHRIFT

(11) **EP 2 804 758 B1**
(45) Veröffentlichungstag und Bekanntmachung des Hinweises auf die Patenterteilung: **04.10.2017**
(21) Anmeldenummer: 13710777.7
(22) Anmeldetag: 16.01.2013
(51) Int. Cl.: B41F 5/24

(54) **SCHNELLVERSTELLUNG VON DRUCKWERKKOMPONENTEN MIT FEINJUSTAGE UND SPIELFREISTELLUNG**
FAST MOVEMENT OF PRINTING PRESS COMPONENTS WITH FINE ADJUSTMENT AND ZERO BACKLASH
RÉGLAGE RAPIDE D'ÉLÉMENTS D'IMPRESSION À AJUSTAGE FIN, ET POSITIONNEMENT SANS JEU

(30) Priorität: 18.01.2012 DE 102012000752
(43) Veröffentlichungstag der Anmeldung: 26.11.2014
(73) Patentinhaber: Servotec GmbH Herbert Bauch, 40764 Langenfeld (DE)
(72) Erfinder: BAUCH, Herbert, 51399 Burscheid (DE)
(74) Vertreter: Cohausz Hannig Borkowski Wißgott
(86) Internationale Anmeldenummer: PCT/DE2013/000020
(87) Internationale Veröffentlichungsnummer: WO 2013/107439

(56) Entgegenhaltungen:
- EP-A1- 0 770 481
- EP-A1- 2 085 222
- DE-A1- 10 242 009
- FR-A- 669 672
- US-A- 2 405 795

## Beschreibung

Die Erfindung betrifft eine Schnellverstellvorrichtung von Druckwerkkomponenten insbesondere für Flexodruckwerke, bei der sowohl die Druckwalze gegen den Gegendruckwalze als auch die Rasterwalze gegen den Druckwalze und die Farbwalze gegen die Rasterwalze zu- oder abgestellt werden. Gleichzeitig wird eine verschleissunabhängige Spielfrei Stellung zwischen Spindel und Mutter vorgeschlagen. Die Schnellverstellung ist immer dann gefragt, wenn größere Abstände schnell überbrückt werden müssen wie z. B. bei Formatwechseln oder bei Druckfunktion an oder ab. Die Feinverstellung ist dann hilfreich, wenn exakter und gleichmäßiger Druck eingestellt werden soll.

Der vorgeschlagenen Lösungen zur Schnellverstellung am nächsten kommt die offengelegte Anmeldung DE 10242009 B4. Sie stellt eine Druckmaschine vor, bei der zur Schnellverstellung verschiedene Spindeln an Wellen angekoppelt werden, die mit unterschiedlichen Übersetzungen antreiben.

Weitere Verstellvorrichtungen von Druckwerkkomponenten sind z.B. aus FR 669672 A, EP 0770481 A1 und EP 2085222 A1 bekannt. Nachteile der bestehenden Lösungen für Schnellverstellungen sind zusätzliche Bedienungs-, Kraftübertragungs-, Lager- und Kupplungselemente. Zudem ist keine ausreichend genaue Vorfixierung für einzelne Formate und keine gleichzeitige automatische und manuelle Betätigung möglich. Der Raumbedarf und der Bauaufwand der bekannten Lösungen für zusätzliche Schnellverstellung ist zudem sehr groß. Die notwendige spezielle Anpassung an die Gegebenheiten, also die fehlende Universalität ist ein weiteres Manko der bekannten Lösungen.

Der Erfindung liegt deswegen die Aufgabe zugrunde, eine universelle Lösung mit geringem Bauaufwand und möglichst geringem Raumbedarf zu finden, die sich manuell und motorisch antreiben lässt und dabei sehr steif und unempfindlich gegen äußere Einflüsse wie Verschmutzung
Die Aufgabe wird durch eine Schnellverstellvorrichtung von Druckwerkkomponenten mit integrierter Feinjustage gemäß Anspruch 1 gelöst.

Vorteilhafte Weiterbildungen ergeben sich aus den Unteransprüchen 2-9.

Erfindungsgemäß verfügt eine Spindel über zumindest zwei gleichgerichtete in der Steigung unterschiedliche Gewindestrecken mit einem Steigungsteil SA und einem Steigungsteil SB in die jeweils zumindest eine Mutter MA und eine Mutter MB mit entsprechender Steigung eingreifen, wobei zumindest eine der Muttern, in ein Basisgestell, einen Schlitten oder einen Lagerbock eingebunden ist und wahlweise auf der Spindel oder im Lager festsetztbar ist.

Durch die Verwendung einer erfindungsgemäßen Spindel in Kombination mit zumindest einer Mutter, die wahlweise festsetzbar ist, wird eine platz- und raumsparende Vorrichtung realisiert, die eine Schnell- und Feinverstellung von Druckwerkskomponenten mit einer Spindel ermöglicht.

Die präzise Feinverstellung der Druckwerkkomponenten bei gleichzeitig hoher Belastbarkeit erfolgt vorzugsweise durch typische Bewegungsgewinde wie Trapez- oder Kugelrollspindeln oder aus Kombinationen verschiedener Gewinde. Wichtig ist ein geringer Reibverlust und die Möglichkeit der Spielfreistellung in der Bewegungsrichtung. Um eine Schnellverstellung mittels Gewinde realisieren zu können ist große Steigung und damit i. d. R. ein angemessener Durchmesser notwendig. Ein großer Spindeldurchmesser ist auch für hohe Kraftübertragung und massive Bauweise notwendig. Bei besonders großen Steigungen sind mehrgängige Gewinde vorgesehen. Zur Realisierung der Feinverstellung befinden sich auf einer

Gewindespindel, die wahlweise auch aus mehreren Teilen bestehen kann zumindest zwei unterschiedliche Steigungsstrecken in die Muttern mit entsprechend gleicher Steigung eingreifen. Bei der Feinverstellung wird an der Gewindespindel, oder synchron an den Muttern MA und MB gedreht. Die Distanzänderung der Muttern zueinander entspricht je Umdrehung lediglich der Steigungsdifferenz zwischen Steigungsteile SA und SB. Dies gilt in beiden Bewegungsrichtungen. Von diesen Systemen können mehrere nacheinander, übereinander sowie ineinander angeordnet oder miteinander starr, kraftabhängig, federnd und oder lösbar miteinander gekoppelt sein.

Zur Spielfreistellung wird vorgeschlagen zwischen den Muttern MA und MB bzw. den Bauteilen, die diese Muttern kraftbegrenzte Aktoren wie Federn, Zylinder usw. einzusetzen. Weiter wird vorgeschlagen Spielfreiheit dadurch zu erreichen, dass die Muttern geschlitzt oder geteilt und federnd gegeneinander verspannt sind. Die Spielfreiheit bleibt dann auch bei Verschleiß und Wärmedehnung erhalten.

Ein Ausführungsbeispiel wird nachfolgend anhand von Zeichnungen näher erläutert.

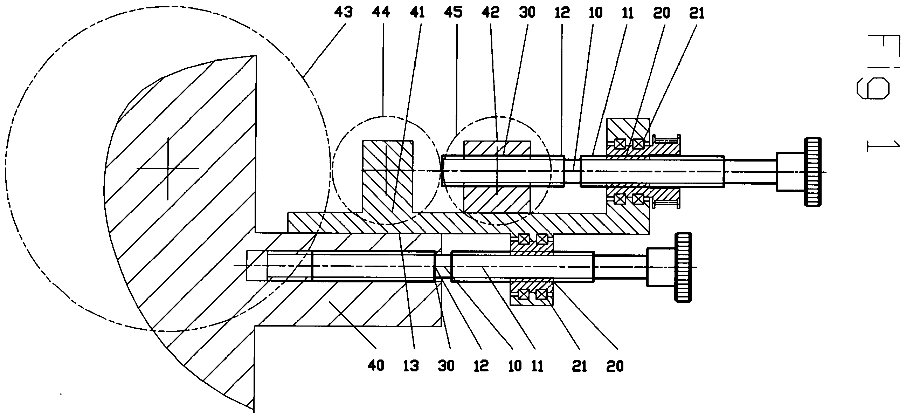

Fig. 1 zeigt die Seitenansicht eines Ausschnittes eines Druckwerkes bestehend aus dem Basisgestell mit Gegendruckwalze, Schlitten mit Druckwalze und Lagerbock mit Rasterwalze.

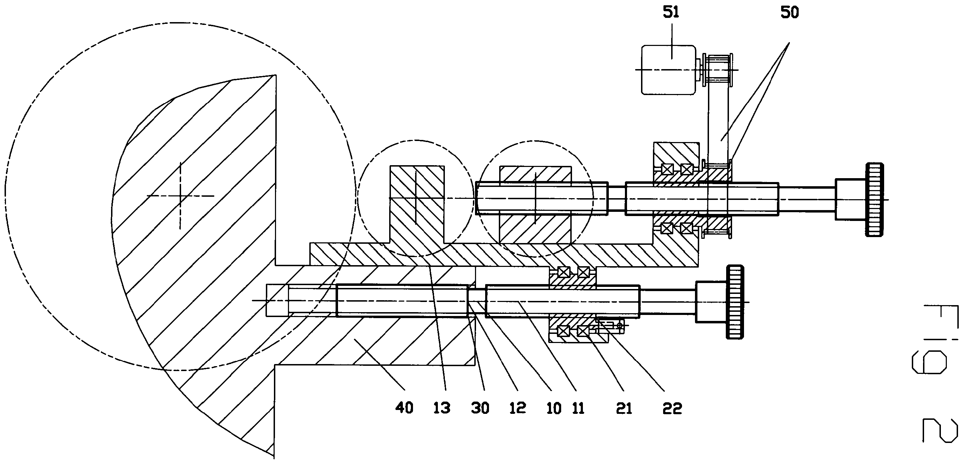

Fig. 2 zeigt wie Fig. 1 die Seitenansicht eines Ausschnittes eines Druckwerkes mit Stellantrieb für die Schnellverstellung und einer beispielhaften Ausführung einer Mutternklemmung.

Die Darstellungen zeigen die besondere Art der Schnellverstellung oder Schnellverschiebung und alternativ die exakte Feinjustage der Druckwalze gegenüber der Gegendruckwalze und der Rasterwalze gegenüber der Druckwalze z. B. beim Formatwechsel. In gleicher Weise lassen sich weitere Bauteile bzw. Walzen w. z. B. Die Farbwalze zur Rasterwalze positionieren. Die Walzen werden im Verbund oder einzeln angetrieben. Zwischen dem Basisgestell, den Schlitten und den Lagerböcken befinden sich Führungen, die Querkräfte und Momente aufnehmen und eine exakte Bewegungsrichtung vorgeben. Die Führungen sind mit Klemm- oder Fixierelementen versehen, so dass das Basisgestell mit den Schlitten und Lagerböcken kraft- und/oder formschlüssig miteinander verbunden werden können. Zur exakten Wiederholung von Positionen lassen sich Anschläge im Bereich der Führungen setzen.

Für eine stabile Verbindung zwischen den Walzen und eine gute Kraftübertragung werden dicke Spindeln mit entsprechend großem Gewinde und demzufolge mit großer Steigung vorgeschlagen. Die große Steigung bringt es mit sich, dass mit wenigen Umdrehungen eine große Strecke zurückgelegt wird, was eine sehr schnelle Verstellung der Abstände mit sich bringt. Diese Schnellverstellung ist gegeben, wenn sich die Spindel mit dem Steigungsteil SB
in der Mutter MB dreht und die im Schlitten gelagerte Mutter MA im Schlitten rotiert und auf dem Steigungsteil SA der Spindel festsitzt. Das Festsetzen auf der Spindel erfolgt beispielsweise durch das Spreizen der geschlitzten Mutter MA mittels Maschinenelement. Mit jeder Umdrehung der Spindel, oder der Mutter MB, wird Abstand zwischen Gegendruckwalze und Druckwalze entsprechend der Steigung von z. B. 4 mm verändert. Für die Feinjustage wird die Mutter MA nicht mehr auf dem Steigungsteil SA der Spindel, sondern im Schlitten festgesetzt. Dies erfolgt beispielhaft durch Betätigung des gleichen Maschinenelementes in umgekehrter Weise wie zum Klemmen auf der Spindel womit das in der Mutter sitzende Maschinenelement nicht mehr auf die Spindel, sondern auf den Schlitten einwirkt. Nun bewegt sich die Spindel sowohl in der Mutter MA als auch in der Mutter MB. Die Abstandsänderung zwischen Gegendruckwalze und Druckwalze beträgt damit nur die Differenz der Steigungsteile SA und SB, also z. B. nur 0,1 mm je Umdrehung.

In gleicher Weise lässt sich auch bei allen anderen Bauteilen des Druckwerkes verfahren die eine gegenseitige variable Positionszuordnung haben.

Soll die Schnellverstellung z. B. beim Formatwechsel zentral erfolgen und die Feinjustage manuell so sind beispielsweise alle Muttern MA oder MB für die Verstellung der Druckwalzen und der Rasterwalzen mittels Antriebselemente wie Gelenkwellen, Riemen, Ketten Zahnräder miteinander verbunden. Die manuelle oder motorische Drehmomenteinleitung an einer Stelle reicht aus um die formatabhängigen Abstände zwischen Gegendruckwalze, Druckwalze und Rasterwalze eines Farbwerkes oder eines ganzen Druckturmes herzustellen.

Es gibt eine Vielzahl weiterer Möglichkeiten der Antriebskombination je nach dem wo sich die größere Steigung befindet, ob die Spindel oder beide Muttern oder eine Spindel mit Mutter angetrieben werden.

Die Spielfreistellung zwischen Mutter und Spindel sowie zwischen Mutter und Basiselement, Schlitten und Lagerbock erfolgt beispielsweise durch das Teilen der Mutter. An der z. B. radialen Trennstelle verfügt die Mutter über über den Drehwinkel verlaufende Rampen, mit beispielsweise der gleichen Steigung wie das Gewinde, die mit dem Drehwinkel den Abstand der Mutternteile verändern. Ein Teil der Mutter ist gegen Rotation gesichert während der andere drehbar ist und durch das Reibmoment oder Federmoment so weit angestellt wird bis zwischen den Gehäusewandungen und den Gewindegängen Spielfreiheit gegeben ist. Den Rücklauf bei umgekehrter Drehrichtung verhindert eine feine Rasterung auf den Rampen oder eine handelsübliche Rücklaufsperre in Form eines Exzenterrollkörpers.

### Bezugszeichenliste:

10 = Spindel 11 = Steigungsteil SA 12 = Steigungsteil SB 13 = Lagerstelle
20 = Mutter MA 21 = Lager 22 = Klemmelement 30 = Mutter MB 40 = Basisgestell
41 = Schlitten 42 = Lagerbock 43 = Gegendruckwalze 44 = Druckwalze
45 = Rasterwalze 50 = Antriebselemente 51 = Stellantrieb

## Patentansprüche

1. Schnellverstellvorrichtung von Druckwerkkomponenten mit integrierter Feinjustage insbesondere für Flexodruckwerke, wobei die Abstände zwischen den Druckwerkkomponenten Gegendruckwalze (43), Druckwalze (44) und Rasterwalze (45), mittels Spindeln (10) bestimmt werden, **dadurch gekennzeichnet, dass** die Spindeln (10) jeweils über zumindest zwei gleichgerichtete in der Steigung unterschiedliche Gewindestrecken mit einem Steigungsteil SA (11) und einem Steigungsteil SB (12) verfügen in die jeweils zumindest eine Mutter MA (20) und eine Mutter MB (30) mit entsprechender Steigung eingreifen, wobei zumindest eine der Muttern (20, 30), in ein Basisgestell (40), einen Schlitten (41) oder einen Lagerbock (42) eingebunden ist und wahlweise auf der Spindel (10) oder über ein Lager (21) auf dem Schlitten festgesetzt wird.

2. Schnellverstellvorrichtung von Druckwerkkomponenten mit integrierter Feinjustage insbesondere für Flexodruckwerke nach Anspruch 1 **dadurch gekennzeichnet, dass** die Muttern MA (20) und/oder MB(30) geschlitzt sind und der geschlitzte Bereich mit einem Maschinenelement oder Aktor federnd oder spannend in Verbindung steht.

3. Schnellverstellvorrichtung von Druckwerkkomponenten mit integrierter Feinjustage insbesondere für Flexodruckwerke nach Anspruch 1 **dadurch gekennzeichnet, dass** die axial fest in dem Basisgestell (40), dem Schlitten (41) oder dem Lagerbock (42) verankerten Muttern MA (20) und/oder MB (30) getrennt sind und die gegeneinander beweglichen Mutterteile mit Federn und/oder Maschinenelemente und/oder Aktoren in Verbindung stehen.

4. Schnellverstellvorrichtung von Druckwerkkomponenten mit integrierter Feinjustage insbesondere für Flexodruckwerke nach Anspruch 1 **dadurch gekennzeichnet, dass** zwischen kraftübertragenden Bauteilen der Muttern MA (20) und MB (30) Federelemente oder Krafterzeugungselemente eingesetzt sind.

5. Schnellverstellvorrichtung von Druckwerkkomponenten mit integrierter Feinjustage insbesondere für Flexodruckwerke nach Anspruch 1 **dadurch gekennzeichnet, dass** alle Muttern MA (20) oder MB (30) eines Druckwerkes zu einem Antriebsstrang rotatorisch formschlüssig verbunden sind und der Antriebsstrang manuell und/oder motorisch angetrieben und festgesetzt wird und über eine Positioniereinrichtung verfügt.

6. Schnellverstellvorrichtung von Druckwerkkomponenten mit integrierter Feinjustage insbesondere für Flexodruckwerke nach zumindest einem der Ansprüche 1 bis 5 **dadurch gekennzeichnet, dass** alle Spindeln (10) eines Druckwerkes oder Druckturmes an einen Rotationsantriebsstrang angekoppelt und abgekoppelt werden können und die drehbar in dem Basisgestell, dem Schlitten oder dem Lagerblock gelagerten Muttern (20 und 30) wahlweise auf der Spindel (10) oder gegenüber Basisgestell (40), Schlitten (41) oder Lagerbock (42) geklemmt sind.

7. Schnellverstellvorrichtung von Druckwerkkomponenten mit integrierter Feinjustage insbesondere für Flexodruckwerke nach zumindest einem der Ansprüche 1 bis 5 **dadurch gekennzeichnet, dass** alle drehbar gelagerten Muttern MA (20) oder MB (30) eines Druckwerkes oder eines Druckturmes mittels eines Antriebselements (50) mit einem motorischen Stellantrieb (51) verbunden sind und über eine automatische Umschaltung eines mit der Mutter MA (20) oder Mutter MB (30) in Verbindung stehenden Klemmelementes (22) zwischen den Spindeln (10) und den die drehbar gelagerten Muttern aufnehmenden Basisgestell (40), Schlitten (41) oderLagerbock (42) verfügt, wobei jede Spindel (10) dabei einzeln manuell antreibbar ist.

8. Schnellverstellvorrichtung von Druckwerkkomponenten mit integrierter Feinjustage insbesondere für Flexodruckwerke nach zumindest einem der Ansprüche 1 bis 6 **dadurch gekennzeichnet, dass** Spindeln (10) mit zumindest einem Steigungsteil SA (11) und einem Steigungsteil SB (12) an beiden Steigungsteilen mit Linkssteigung oder mit Rechtssteigung ausgeführt sind wobei die Steigungsteile einer Spindel unterschiedliche Gewindearten aufweisen.

9. Schnellverstellvorrichtung von Druckwerkkomponenten mit integrierter Feinjustage insbesondere für Flexodruckwerke nach zumindest einem der Ansprüche 1 bis 8 **dadurch gekennzeichnet, dass** zur Spielfreistellung zwischen Mutter (20) und Spindel (10) sowie zwischen Mutter (20) und Basisgestell (40), Schlitten (41) oder Lagerbock (42) die Mutter (20) radial getrennt ist und an den Trennstellen mehrere über den Umfang verlaufende Rampen aufweist, wobei ein Teil der Mutter (20) gegen Rotation gesichert ist und der andere Teil der Mutter (20) durch das Reibmoment einer rotierenden Spindel (10) oder durch eine zusätzliche Spiralfeder rotatorisch angetrieben ist und ein Rücklauf dieses Teils der Mutter (20) durch Rippen auf den Rampen verhindert ist.

## Claims

1. Quick adjustment apparatus of printing unit components with integrated precision adjustment, in particular for flexographic printing units, the spacings between the printing unit components of backpressure roll (43), impression roll (44) and engraved roll (45) being determined by means of spindles (10), **characterized in that** the spindles (10) in each case have at least two identically directed thread sections of different pitch with a pitch part SA (11) and a pitch part SB (12), into which thread sections the in each case at least one nut MA (20) and one nut MB (30) engage with a corresponding pitch, at least one of the nuts (20, 30) being incorporated into a base frame (40), a carriage (41) or a bearing block (42) and being fixed optionally on the spindle (10) or via a bearing (21) on the carriage.

2. Quick adjustment apparatus of printing unit components with integrated precision adjustment, in particular for flexographic printing units, according to Claim 1, **characterized in that** the nuts MA (20) and/or MB (30) are slotted, and the slotted region is connected to a machine element or actuator in a sprung or bracing manner.

3. Quick adjustment apparatus of printing unit components with integrated precision adjustment, in particular for flexographic printing units, according to Claim 1, **characterized in that** the nuts MA (20) and/or MB (30) which are anchored in an axially fixed manner in the base frame (40), the carriage (41) or the bearing block (42) are split, and the nut parts which can be moved with respect to one another are connected by way of springs and/or machine elements and/or actuators.

4. Quick adjustment apparatus of printing unit components with integrated precision adjustment, in particular for flexographic printing units, according to Claim 1, **characterized in that** spring elements or force-generating elements are inserted between force-transmitting components of the nuts MA (20) and MB (30).

5. Quick adjustment apparatus of printing unit components with integrated precision adjustment, in particular for flexographic printing units, according to Claim 1, **characterized in that** all nuts MA (20) or MB (30) of a printing unit are connected in a rotationally positively locking manner to form a drive train, and the drive train is driven and fixed in a manual and/or motorized manner, and has a positioning device.

6. Quick adjustment apparatus of printing unit components with integrated precision adjustment, in particular for flexographic printing units, according to at least one of Claims 1 to 5, **characterized in that** all spindles (10) of a printing unit or press tower can be coupled or uncoupled to a rotating device unit and which are clamped in a rotational manner in the base frame, the carriage or the nuts (20 and 30) located in the bearing block, optionally on the spindle (10) or opposite of the base frame (40), carriage (41) or bearing block (42).

7. Quick adjustment apparatus of printing unit components with integrated precision adjustment, in particular for flexographic printing units, according to at least one of claims 1 to 5, **characterized in that** all rotatably mounted nuts MA (20) or MB (30) of a printing unit or press tower are connected to a motorized actuating drive (51) by means of a drive element (50), and have an automatic switchover means of a clamping element (22) which is connected to the nut MA (20) or nut MB (30) between the spindles (10) and the base frame (40), the carriage (41) or the bearing block (42) which receives the rotatably mounted nuts, it being possible here for each spindle (10) to be driven individually in a manual manner.

8. Quick adjustment apparatus of printing unit components with integrated precision adjustment, in particular for flexographic printing units, according to at least one of Claims 1 to 6, **characterized in that** spindles (10) having at least one pitch part SA (11) and one pitch part SB (12) are configured on both pitch parts with a left-hand pitch or with a right-hand pitch, the pitch parts of a spindle having different thread types.

9. Quick adjustment apparatus of printing unit components with integrated precision adjustment, in particular for flexographic printing units, according to at least one of Claims 1 to 8, **characterized in that**, in order to remove the backlash between the nut (20) and the spindle (10) and between the nut (20) and the base frame (40), the carriage (41) or the bearing block (42), the nut (20) is split radially and, at the separating points, has a plurality of ramps which run over the circumference, one part of the nuts (20) being secured against rotation and the other part of the nuts (20) being driven rotationally by way of the frictional moment of a rotating spindle (10) or by way of an additional helical spring, and a reverse rotation of the said part of the nuts (20) being prevented by way of ribs on the ramps.

## Revendications

1. Dispositif de réglage rapide d'éléments d'impression à ajustage fin intégré en particulier pour des unités d'impression flexographique, dans lequel les distances entre les éléments d'impression, cylindre de contre-pression (43), cylindre d'impression (44) et rouleau tramé (45), sont déterminées au moyen de broches (10), **caractérisé en ce que** les broches (10) sont respectivement dotées d'au moins deux zones filetées différentes par le pas et de même orientation avec une partie de pas SA (11) et une partie de pas SB (12) dans lesquelles s'engagent respectivement au moins un écrou MA (20) et un écrou MB (30) de pas correspondant, dans lequel au moins un des écrous (20, 30) est intégré dans un bâti de base (40), un chariot (41) ou un support de palier (42) et est fixé au choix sur la broche (10) ou par un palier (21) sur le chariot.

2. Dispositif de réglage rapide d'éléments d'impression avec ajustage fin intégré en particulier pour des unités d'impression flexographique selon la revendication 1, **caractérisé en ce que** les écrous MA (20) et/ou MB (30) sont fendus et la région fendue est en relation de liaison élastique ou de serrage avec un élément de machine ou un actionneur.

3. Dispositif de réglage rapide d'éléments d'impression à ajustage fin intégré en particulier pour des unités d'impression flexographique selon la revendication 1, **caractérisé en ce que** les écrous MA (20) et MB (30) fixement ancrés axialement dans le bâti de base (40), le chariot (41) ou le support de palier (42), sont coupés et les parties d'écrou mobiles l'une par rapport à l'autre sont en liaison avec des ressorts et/ou des éléments de machine et/ou des actionneurs.

4. Dispositif de réglage rapide d'éléments d'impression à ajustage fin intégré en particulier pour des unités d'impression flexographique selon la revendication 1, **caractérisé en ce que** des éléments de ressort ou des éléments de production de force sont introduits entre des pièces de transmission de force des écrous MA (20) et MB (30).

5. Dispositif de réglage rapide d'éléments d'impression à ajustage fin intégré en particulier pour des unités d'impression flexographique selon la revendication 1, **caractérisé en ce que** tous les écrous MA (20) et MB (30) d'une unité d'impression sont reliés par emboîtement en rotation à une ligne d'entraînement et la ligne d'entraînement est entraînée et fixée de façon manuelle ou motorisée et est dotée d'un système de positionnement.

6. Dispositif de réglage rapide d'éléments d'impression à ajustage fin intégré en particulier pour des unités d'impression flexographique selon au moins une des revendications 1 à 5, **caractérisé en ce que** toutes les broches (10) d'une unité d'impression ou d'une tourelle d'impression peuvent être couplées à et découplées d'une ligne d'entraînement en rotation et les écrous (20 et 30) montés de façon rotative sur le bâti de base, le chariot ou le support de palier sont serrés au choix sur la broche (10) ou par rapport au bâti de base (40), au chariot (41) ou au support de palier (42).

7. Dispositif de réglage rapide d'éléments d'impression à ajustage fin intégré en particulier pour des unités d'impression flexographique selon au moins une des revendications 1 à 5, **caractérisé en ce que** tous les écrous MA (20) et MB (30) montés de façon rotative d'une unité d'impression ou d'une tourelle d'impression sont reliés à un mécanisme de commande motorisé (51) au moyen d'un élément d'entraînement (50) et sont dotés d'une commutation automatique d'un élément de serrage (22) se trouvant en liaison avec l'écrou MA (20) ou l'écrou MB (30) entre les broches (10) et le bâti de base (40), le chariot (41) ou le support de palier (42) comprenant les écrous montés de façon rotative, dans lequel chaque broche (10) peut en l'occurrence être entraînée à la main uniquement.

8. Dispositif de réglage rapide d'éléments d'impression à ajustage fin intégré en particulier pour des unités d'impression flexographique selon au moins une des revendications 1 à 6, **caractérisé en ce que** des broches (10) sont réalisées avec au moins une partie de pas SA (11) et une partie de pas SB (12) sur les deux parties de pas avec pas à gauche ou avec pas à droite, dans lequel les parties de pas d'une broche présentent des types de filets différents.

9. Dispositif de réglage rapide d'éléments d'impression à ajustage fin intégré en particulier pour des unités d'impression flexographique selon au moins une des revendications 1 à 8, **caractérisé en ce que** pour le positionnement sans jeu entre un écrou (20) et une broche (10) ainsi qu'entre un écrou (20) et le bâti de base (40), le chariot (41) ou le support de palier (42), l'écrou (20) est coupé radialement et présente aux points de séparation plusieurs rampes s'étendant sur la périphérie, dans lequel une partie de l'écrou (20) est bloquée contre la rotation et l'autre partie de l'écrou (20) est entraînée en rotation par le couple de friction d'une broche tournante (10) ou par un ressort spiral supplémentaire et empêche un retour de cette partie de l'écrou (20) au moyen de nervures sur les rampes.
